# EUROPÄISCHE PATENTSCHRIFT

(11) **EP 2 373 912 B1**
(45) Veröffentlichungstag und Bekanntmachung des Hinweises auf die Patenterteilung: **05.09.2012**
(21) Anmeldenummer: 09778643.8
(22) Anmeldetag: 22.09.2009
(51) Int. Cl.: F16K 17/04, F16K 24/04

(54) **DRUCKENTLASTUNGSVENTIL**
PRESSURE RELIEF VALVE
SOUPAPE DE DÉCOMPRESSION

(30) Priorität: 03.12.2008 DE 102008060337
(43) Veröffentlichungstag der Anmeldung: 12.10.2011
(73) Patentinhaber: Maschinenfabrik Reinhausen GmbH, 93059 Regensburg (DE)
(72) Erfinder: HAEMEL, Kai, 63637 Jossgrund (DE); SCHLEPP, Klaus, 93142 Maxhütte-Birkenhöhe (DE)
(86) Internationale Anmeldenummer: PCT/EP2009/006820
(87) Internationale Veröffentlichungsnummer: WO 2010/063335

(56) Entgegenhaltungen:
- EP-A- 0 928 918
- WO-A-2004/083700
- US-A- 1 788 358
- US-A- 2 904 616
- US-A- 3 746 263
- US-A- 4 831 957

## Beschreibung

Die Erfindung betrifft ein Druckentlastungsventil für ölgefüllte Transformatoren und Stufenschalter. Überschreitet auf Grund von Fehlfunktionen oder Störungen der Druck im Ölkessel des Transformators oder im Stufenschalter einen vorbestimmten Grenzwert, so öffnet das während des normalen Betriebes geschlossene Druckentlastungsventil und stellt eine Druckentlastung mit der den Transformator oder den Stufenschalter umgebenden Atmosphäre her.

Ein solches Druckentlastungsventil ist aus der WO 2004/083700 A1 bekannt. Es weist einen Gehäuseflansch auf, der eine durchgehende Öffnung besitzt und auf einem Transformatorendeckel o. ä. verschraubt ist. Oben wird die Öffnung des Gehäuseflansches durch einen Ventildeckel verschlossen. Um ein öldichtes Abdichten durch den Ventildeckel zu gewährleisten, ist eine umlaufende Dichtung vorgesehen. Weiterhin ist ein Federdeckel vorgesehen, wobei zwischen Federdeckel und Ventildeckel vorgespannte Federn angeordnet sind. Bei Überdruck im Transformatorenkessel wird der Ventildeckel nach oben gegen die Kraft dieser Federn ausgelenkt; in dieser ausgelenkten Stellung liegt er dann nicht mehr auf der umlaufenden Dichtung auf. Das überschüssige heiße Fluid oder auch Gase gelangen damit zunächst ins Innere des Druckentlastungsventiles und durch dessen Auslassöffnung nach außen. Sobald der unzulässige Überdruck wieder abgebaut ist, wird durch die Federkräfte der Ventildeckel wieder in seine Ruhelage gedrückt, in der ihn die umlaufende Dichtung gegen die Öffnung des Gehäuseflansches wieder abdichtet.

Bei diesem bekannten Druckentlastungsventil ist noch eine weitere Dichtung, die als Dichtlippe ausgebildet ist, vorgesehen. Diese Dichtlippe ist nach Art eines Scheibenwischergummis flexibel auslenkbar und korrespondiert mit der Innenseite des nach unten gebogenen topfförmigen Randbereichs des Ventildeckels. Diese zusätzliche Dichtlippe dient dazu, unter bestimmten Betriebsbedingungen die Öffnungsgeschwindigkeit des Druckentlastungsventils im Auslösefall zu erhöhen sowie ein "Flattern" zu vermeiden.

Eine ganz ähnliche umlaufende Dichtlippe, die ebenfalls am Ventildeckel anliegt, ist auch bereits aus der US 4,676,266 bekannt. Ihre Funktion wird dort als "wind shield wiper-action" bezeichnet, und sie soll auch dort dazu dienen, einen bestimmten Druck beim Öffnen des Ventildeckels zunächst aufrechtzuerhalten und damit die Öffnungsgeschwindigkeit des Druckentlastungsventils im Auslösefall zu erhöhen.

Die WO 02/057671 schließlich beschreibt noch ein anderes Druckentlastungsventil, bei dem die eigentliche, funktionsnotwendige Dichtung des Ventildeckels und die zusätzliche beschriebene Dichtlippe zu einer einzigen, einstückig ausgebildeten, treppenförmigen Dichtung vereinigt sind.

Bei all diesen bekannten Druckentlastungsventilen hat es sich jedoch gezeigt, dass im praktischen Betrieb Schwierigkeiten auftreten können. Nach einer Auslösung des Druckentlastungsventils und der Rückkehr des Ventildeckels in die Ruhelage entsteht ein rotationssymmetrischer Hohlraum, der von der umlaufenden Dichtung zur eigentlichen Abdichtung des Ventildeckels und der weiteren Lippendichtung, die den seitlichen Randbereich des Ventildeckels abdichtet, gebildet ist. In diesem Hohlraum verbleibt ein gewisses Ölvolumen. Bedingt durch die ja gerade erwünschte dichtende Wirkung der Lippendichtung nach dem Stand der Technik kann dieses Ölvolumen nicht nach unten entweichen.
Dieses verbleibende Ölvolumen behindert das Ansprechverhalten des Druckentlastungsventils bei weiteren Auslösungen, besonders bei kurz hintereinander stattfindenden wiederholten Auslösungen. Es kann dazu führen, dass das Druckentlastungsventil in der Folge schon bei geringem Druckanstieg anspricht, was eine Fehlauslösung darstellt. Es ist weiterhin möglich, dass trotz der konstruktiven Vorkehrungen das gerade unerwünschte "Flattern" dennoch auftritt.

Aus der US 3217082 A ist bereits ein weiteres Druckentlastungsventil bekannt, bei dem die untere, umlaufende Dichtung, die mit dem Ventildeckel korrespondiert, als O-Ring-Dichtung ausgebildet ist. Die Führung dieser umlaufenden O-Ring-Dichtung weist im Gehäuse Aussparungen auf, so dass die Dichtung in diesen Bereichen nicht fest gegen den inneren Rand des Ventildeckels gepresst wird, derart, dass ein Druckausgleich des Hohlraumes zwischen den umlaufenden Dichtungen mit der Umgebung erfolgen kann. Eine solche Lösung ist jedoch für gattungsgemäße Druckentlastungsventile mit umlaufender Dichtlippe generell nicht geeignet.

Aufgabe der Erfindung ist es, diese Nachteile der bekannten Druckentlastungsventile zu beseitigen und ein gattungsgemäßes Druckentlastungsventil mit umlaufender Dichtlippe anzugeben, das ein konstantes und reproduzierbares Ansprechverhalten auch bei mehrmaliger Auslösung kurz hintereinander behält. Ferner soll kein "Flattern" auch bei diesen Betriebsbedingungen auftreten.

Diese Aufgabe wird durch ein Druckentlastungsventil mit den Merkmalen des ersten Patentanspruches gelöst. Die Unteransprüche betreffen vorteilhafte Weiterbildungen der Erfindung.

Der Kern der Erfindung besteht darin, dass die an sich bekannte umlaufende Dichtlippe, die am nach unten gebogenen topfförmigen Randbereich des Ventildeckels flexibel anliegt, mit mindestens einem Durchbruch, besser noch mehreren Durchbrüchen, versehen ist. Dadurch ist es auf einfache Weise möglich, dass im Raum zwischen der eigentlichen den Ventildeckel abdichtenden Dichtung und der zusätzlichen Dichtlippe verbleibendes Öl im stationären Betrieb nach unten abtropfen kann und damit die Ansprechschwelle des gesamten Druckentlastungsventils unverändert bleibt.

Besonders vorteilhaft ist es, wenn die erfindungsgemäßen Durchbrüche als Aussparungen an der äußeren, dichtenden Kontur der Dichtlippe 19 vorgesehen werden. Es ist aber ebenso möglich, stattdessen Löcher im Dichtungsmaterial an anderer Stelle vorzusehen.
Die Zahl der Aussparungen kann relativ gering gehalten werden, so dass zwar im beschriebenen Hohlraum verbleibende Öl abtropfen kann, die eigentliche "wind shield wiper" -Funktion der Dichtlippe aber nicht wesentlich beeinträchtigt wird.

Die Erfindung soll nachfolgend an Hand von Zeichnungen näher erläutert werden. Es zeigen:
- Figur 1: ein erfindungsgemäßes Druckentlastungsventil in vollständiger schematischer Darstellung
- Figur 2: ein vergrößertes Detail aus Figur 1
- Figur 3: eine erfindungsgemäße Dichtlippe allein, von oben gesehen.

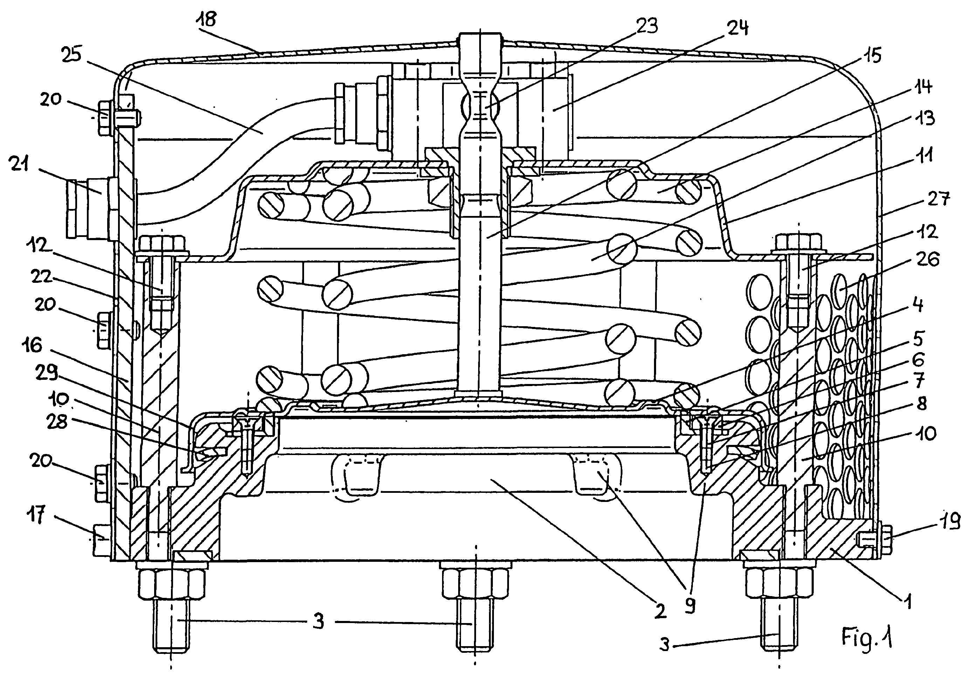

Zunächst soll an Hand von Figur 1 der prinzipielle Aufbau des Druckentlastungsventils beschrieben werden.

Es weist einen Gehäuseflansch 1 auf, der vorzugsweise aus Guss gefertigt ist und eine durchgehende Öffnung 2 besitzt. Dieser Gehäuseflansch 1 ist mit Befestigungsschrauben 3, die vorzugsweise kreisförmig angeordnet sind, mit dem nicht dargestellten Transformatorendeckel auf an sich bekannte Weise verschraubt. Oben wird die Öffnung 2 des Gehäuseflansches 1 durch einen Ventildeckel 4 auf bekannte Weise verschlossen. Um ein öldichtes Abdichten zu gewährleisten, ist eine umlaufende Dichtung 5 mit einem L-förmigen Querschnitt vorgesehen, die mittels eines Klemmringes 6 und kreisförmig angeordneter Schrauben 7 am Gehäuseflansch 1 befestigt ist. Dazu sind Gewinde 8 an Verstärkungsrippen 9 des Gehäuseflansches 1 angebracht, in die die Schrauben 7 eingedreht werden, so dass der Klemmring 6 die Dichtung 5 zuverlässig fixiert. Weiterhin sind in dem Gehäuseflansch 1 Bolzen 10 mit Innengewinde eingeschraubt, die sich senkrecht nach oben erstrecken. Ein Federdeckel 11, der dem Gehäusedeckel nach dem Stand der Technik entspricht, ist mittels Schrauben 12, die von oben in die Innengewinde der Bolzen 10 eingeschraubt sind, an diesen befestigt. Zwischen Federdeckel 11 und Ventildeckel 4 befinden sich auf an sich bekannte Weise zwei vorgespannte Federn, nämlich eine innere Feder 13 sowie eine äußere Feder 14. Sowohl innere Feder 13 als auch äußere Feder 14 stützen sich mit ihrem jeweils oberen Ende an konzentrischen Absätzen an der Unterseite des Federdeckels 11 ab; mit ihrem jeweils oberen Ende stützen sie sich an der Oberseite des Ventildeckels 4 ab, der ebenfalls eine entsprechende konzentrische Konturierung aufweist. Zentrisch ist am Ventildeckel 4 noch ein Signalstift 15 vorgesehen, der senkrecht nach oben reicht. Seitlich ist ferner am Gehäuseflansch 1 ein senkrechtes Durchführungsblech 16 mittels Befestigungsschrauben 17 befestigt, auf das später noch näher eingegangen wird. Das gesamte Gerät wird von einem topfförmigen Gehäuse 18 umschlossen, das mittels Schrauben 19 am Gehäuseflansch 1 sowie mittels weiterer Schrauben 20 am Durchführungsblech 16 befestigt wird. Am Durchführungsblech 16 sind eine oder mehrere Kabeldurchführungen 21 vorgesehen; damit das Gehäuse 18 montiert werden kann, besitzt es eine seitliche Aussparung 22, derart, dass es mit dieser Aussparung 22 von oben bei der Montage über die Kabeldurchführungen 21 geschoben werden kann. Der Signalstift 15 weist in seinem oberen Bereich im Inneren des Gerätes eine Schaltkontur 23 auf, mit der einer oder mehrere Schalter 24, Rollenschalter oder Grenztaster etwa, betätigt werden kann bzw. können. Von diesen Schaltern 24 führen Kabel 25 durch die Kabeldurchführung 21 nach außen. Auf der den Kabeldurchführungen 21 gegenüberliegenden Seite des Gehäuses 18 sind Auslassöffnungen 26 vorgesehen, die im topfförmigen Seitenbereich 27, der sich senkrecht nach unten erstreckt, angeordnet sind.

Weiterhin ist die Dichtlippe 28 gezeigt, die lose eingelegt ist und nach Art eines Scheibenwischergummis auslenkbar ist. Diese Dichtlippe 28 korrespondiert mit dem nach unten gebogenen topfförmigen Randbereich 29 des Ventildeckels 4. Sie dient, wie weiter oben bereits beschrieben, dazu, die Öffnungsgeschwindigkeit des Druckentlastungsventils zu vergrößern sowie ein "Flattern" zu vermeiden.

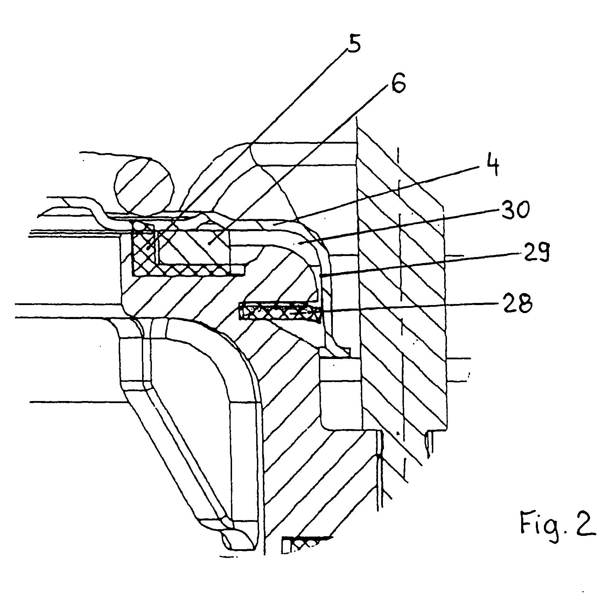

Figur 2 zeigt ein vergrößertes Detail des Druckentlastungsventils, dargestellt sind hier nochmals einen Teil des Ventildeckels 4, die umlaufende Dichtung 5, die durch einen Klemmring 6 befestigt ist, sowie die Dichtlippe 28. In dieser Darstellung ist deutlicher zu erkennen, dass diese Dichtlippe 28 den nach unten gebogenen inneren Randbereich 29 des Ventildeckels 4 abdichtet. Beim Auslösen des Druckentlastungsventils hebt zunächst die obere Dichtung 5 vom Ventildeckel 4 ab, während die zusätzliche, rotationssymmetrische Dichtlippe 28 noch die dichtende Funktion am ebenfalls rotationssymmetrisch umlaufenden Randbereich 29 aufrechterhält. Dies hat zur Folge, dass durch den erhöhten Druck die Öffnungsgeschwindigkeit vergrößert wird, d. h. der Ventildeckel 4 mit größerer Kraft gegen die Kraft der hier nicht dargestellten Federn nach oben bewegt wird. In Figur 2 ist zu erkennen, dass ein rotationssymmetrischer Hohlraum 30 zwischen der Dichtung 5 und der Dichtlippe 28 verbleibt. Da die Dichtlippe 28 im stationären Betrieb abdichtend am Randbereich 29 anliegt, kann in diesem Hohlraum 30 befindliches Öl, das nach dem letzten Öffnen des Druckentlastungsventils dort verblieben ist, nicht ablaufen und beeinflusst nachteilig das weitere Ansprechverhalten.

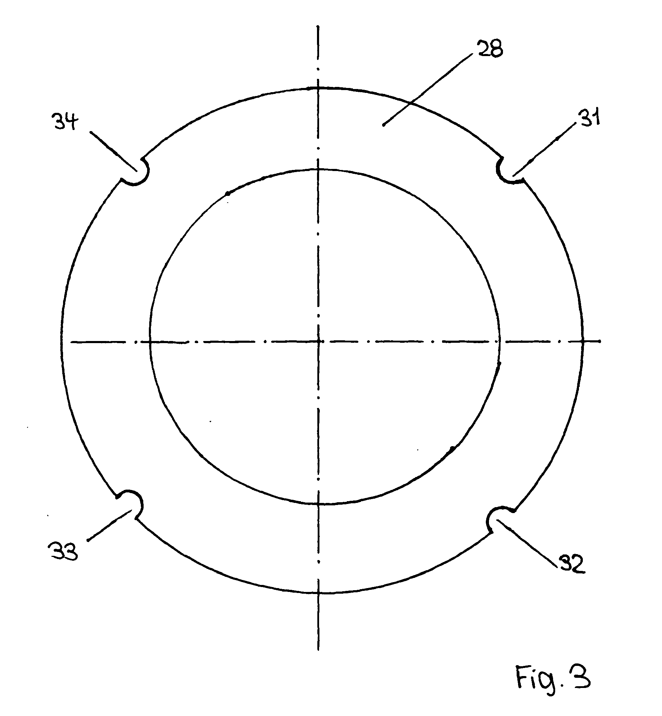

In Figur 3 ist eine erfindungsgemäße Dichtlippe 28 gezeigt, die mehrere Aussparungen 31...34 aufweist. Diese Aussparungen unterbrechen die umlaufende Dichtung und ermöglichen es dem verbleibenden Öl, aus dem Hohlraum 30 nach unten abzutropfen.

Im gezeigten Ausführungsbeispiel sind diese Aussparungen 31...34 kreisförmig dargestellt; es sind im Rahmen der Erfindung selbstverständlich auch alle anderen geometrischen Formen solcher Aussparungen möglich. Weiterhin ist es im Rahmen der Erfindung auch möglich, solche Öffnungen nicht als Aussparungen am dichtenden Rand der Dichtlippe 28, sondern als Durchbrüche weiter in der Mitte der Dichtung vorzusehen.
Auch die Zahl der Aussparungen ist im Rahmen der Erfindung in weiten Grenzen frei wählbar, wobei sich gezeigt hat, dass mehrere kleine Aussparungen, an unterschiedlichen Stellen des Umfanges verteilt, eine bessere Wirkung besitzen als eine einzige große Aussparung.

Besonders vorteilhaft ist es, die Aussparungen 31...34, wenn sie wie in Figur 3 gezeigt an der äußeren dichtenden Kante ausgearbeitet werden, so zu dimensionieren, dass nicht mehr als 1 bis 5 % der umlaufenden Dichtung keine Dichtwirkung mehr haben. Durch diese Dimensionierung ist sichergestellt, dass die Aussparungen einerseits groß genug sind, um das im Hohlraum verbliebene Öl abtropfen zu lassen, andererseits klein genug sind, um die dichtende "wind shield wiper"-Funktion der Dichtlippe 28 zur Erhöhung der Öffnungsgeschwindigkeit nicht wesentlich zu beeinflussen.

Mit dieser relativ einfachen Maßnahme lässt sich die Aufgabe der Erfindung lösen; eine solche erfindungsgemäße Dichtlippe kann auch nachträglich in bereits vorhandene Druckentlastungsventile eingebaut werden.

Neben dem beschriebenen Vorteil der Erfindung, dass ein konstantes, reproduzierbares Ansprechverhalten auch bei mehrmaliger Auslösung kurz hintereinander gegeben ist, ergeben sich noch weitere Vorteile:
Durch die erfindungsgemäße Dichtlippe ist es jetzt möglich, die Dichtigkeitsprüfung des Druckentlastungsventils nach der Funktionsprüfung durchzuführen. Nach dem Stand der Technik waren bisher Dichtheitsprüfungen mit Öl oder Helium nur vor der Funktionsprüfung an einer Unterbaugruppe oder nur mit nachträglicher Demontage von Bauteilen des Druckentlastungsventils möglich, da sich das Prüfmedium bei einer Undichtigkeit zwischen Dichtung und Dichtlippe nicht messbar bzw. erkennbar sammeln konnte. Beim erfindungsgemäßen Druckentlastungsventil hingegen kann eine solche Dichtheitsprüfung nach der eigentlichen Funktionsprüfung, d. h. der Überprüfung des Auslösedrucks, vorgenommen werden. Somit ist sichergestellt, dass das Druckentlastungsventil entsprechend den jeweiligen Anforderungen zulässig dicht ausgeliefert wird. Beim Stand der Technik war es bei solchen Prüfungen unsicher, ob das Druckentlastungsventil nach einer vorgenommenen Funktionsprüfung wieder dicht verschlossen hat. Ein leichtes Verkanten nach der Funktionsprüfung konnte zu Undichtigkeiten führen, die erst später nach dem Einbau entdeckt wurden. Zu diesem Zeitpunkt ist jedoch der Austausch eines Druckentlastungsventiles sehr zeitaufwändig, da in der Regel erst das Kühlmedium des Transformators oder Stufenschalters abgelassen werden muss.

## Patentansprüche

1. Druckentlastungsventil für ölgefüllte Transformatoren und Stufenschalter,
das einen Gehäuseflansch (1) aufweist, der eine Öffnung (2) besitzt, die mit dem Volumen des Transformators oder Stufenschalters in Verbindung stehen kann,
wobei der Gehäuseflansch (1) durch einen Ventildeckel (4), auf den in Schließrichtung die Kraft von Federn (13, 14) wirkt, im stationären Zustand verschlossen ist,
wobei zwischen der Öffnung (2) des Gehäuseflansches (1) und dem Ventildeckel (4) eine umlaufende Dichtung (5) vorgesehen ist
und wobei eine zusätzliche feststehende umlaufende Dichtlippe (28) vorgesehen ist, die mit dem inneren, nach unten gebogenen topfförmigen Randbereich (29) des Ventildeckels (4) korrespondiert,
**dadurch gekennzeichnet,**
**dass** die Dichtlippe (28) mindestens eine Öffnung aufweist, durch die die vollständige Abdichtung unterbrochen ist.

2. Druckentlastungsventil nach Anspruch 1,
**dadurch gekennzeichnet,**
**dass** die mindestens eine Öffnung als mindestens eine Aussparung (31...34) ausgebildet ist, die den dichtenden Rand der Dichtlippe (28) unterbricht.

3. Druckentlastungsventil nach Anspruch 2,
**dadurch gekennzeichnet,**
**dass** durch die mindestens eine Aussparung (31...34) maximal 5 % des umlaufenden dichtenden Randes der Dichtlippe (28) unterbrochen sind.

## Claims

1. Pressure relief valve for oil-filled transformers and tap changers, which comprises a housing flange (1) having an opening (2) able to be connected with the volume of the transformer or tap changer,
wherein the housing flange (1) is in the stationary state closed by a valve cover (4) on which the force of springs (13, 14) acts in closing direction,
wherein an encircling seal (5) is provided between the opening (2) of the housing flange (1) and the valve cover (4) and
wherein an additional stationary encircling sealing lip (28) co-operating with the inner, downwardly bent pot-shaped edge region (29) of the valve cover (4) is provided, characterised that the sealing lip (28) has at least one opening by which complete sealing is interrupted.

2. Pressure relief valve according to claim 1, **characterised in that** the at least one opening is formed as at least one cut-out (31 ... 34), which interrupts the sealing edge of the sealing lip (28).

3. Pressure relief valve according to claim 2, **characterised in that** at most 5% of the encircling sealing edge of the sealing lip (28) is interrupted by the at least one cut-out (31 34).

## Revendications

1. Soupape de décharge de pression pour des transformateurs et des commutateurs à gradins remplis d'huile comportant une bride de boitier (1) équipée d'une ouverture (2) pouvant être mise en liaison avec le volume du transformateur ou du commutateur à gradins, cette bride de boitier (1) étant fermée à l'état stationnaire par un couvercle de soupape (4) sollicité par la force de ressorts (13, 14) dans le sens de la fermeture, une garniture d'étanchéité périphérique (5) étant prévue entre l'ouverture (2) de la bride de boitier (1) et le couvercle de soupape (4), et une lèvre d'étanchéité périphérique fixe supplémentaire (28) étant prévue, cette lèvre d'étanchéité (28) correspondant à la zone du bord (29) en forme de pot recourbée vers le bas du couvercle de soupape (4),
**caractérisée en ce que**
la lèvre d'étanchéité (28) comporte au moins une ouverture permettant d'interrompre l'étanchéité totale.

2. Soupape de décharge de pression conforme à la revendication 1,
**caractérisée en ce que**
l'ouverture est réalisée sous la forme d'au moins un évidement (31...34) qui interrompt le bord d'étanchéité de la lèvre d'étanchéité (28).

3. Soupape de décharge de pression conforme à la revendication 2,
**caractérisée en ce que**
le ou les évidemment(s) (31...34) interromp(en)t au maximum 5 % du bord d'étanchéité périphérique de la lèvre d'étanchéité (28).
